# EUROPÄISCHE PATENTSCHRIFT

(11) **EP 1 073 130 B1**
(45) Veröffentlichungstag und Bekanntmachung des Hinweises auf die Patenterteilung: **09.01.2002**
(21) Anmeldenummer: 00115523.3
(22) Anmeldetag: 19.07.2000
(51) Int. Cl.: H01M 2/10

(54) **Aufnahmevorrichtung zur Halterung und Kontaktierung von Batterien**
Battery holder and connector
Porte-batteries et connecteur

(30) Priorität: 27.07.1999 DE 29913127 U
(43) Veröffentlichungstag der Anmeldung: 31.01.2001
(73) Patentinhaber: A. und K. Müller GmbH & Co. KG, 40595 Düsseldorf (DE)
(72) Erfinder: Eichholz, Heinz-Dieter, Dr., 58642 Iserlohn (DE)
(74) Vertreter: Feder, Wolf-Dietrich, Dr. Dipl.-Phys.

(56) Entgegenhaltungen:
- DE-A- 19 646 047
- US-A- 4 020 245
- US-A- 5 744 930

## Beschreibung

Die Erfindung betrifft eine Aufnahmevorrichtung zur Halterung und Kontaktierung von Batterien, insbesondere Lithium-Fotobatterien, zur Anwendung in feuchtigkeitsgefährdeter Umgebung, insbesondere in elektronisch gesteuerten Sanitärarmaturen.

Lithium-Fotobatterien, die für den Einsatz in Kameras und Blitzlichtgeräten konzepiert wurden, eignen sich aufgrund ihrer hohen Ladungskapazität hervorragend für die Stromversorgung von elektronisch gesteuerten Sanitärarmaturen. Im Gegensatz zur Anwendung in Kameras und Blitzlichtgeräten muß eine solche Batterie in einer Sanitärarmatur feuchtigkeitsgeschützt angeordnet werden.

Der Erfindung liegt die Aufgabe zugrunde, eine Aufnahmevorrichtung zur Halterung und Kontaktierung von Batterien, insbesondere Lithium-Fotobatterien zu schaffen, die es ermöglicht, derartige Batterien in einer feuchtigkeitsgefährdeten Umgebung anzuwenden und insbesondere an elektronisch gesteuerte Sanitärarmaturen anzuschließen oder in Armaturengehäuse zu integrieren.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Grundgedanke der Erfindung besteht darin, eine Hülle aus einem elastomeren Material zu schaffen, die so ausgebildet ist, daß die Batterie durch eine Einstecköffnung einschiebbar ist und nach dem Einschieben einerseits von der Innenkontur der Hülle fest umschlossen ist und andererseits durch den im Bereich der Einstecköffnung angeordneten, nach innen ragenden Kragen festgehalten und an die im Inneren der Hülle angeordneten Federkontakte angedrückt wird. Die Hülle schmiegt sich dabei so dicht um die Batterie, daß der Kontaktbereich gegen Umgebungsfeuchtigkeit geschützt ist. Wie weiter unten anhand eines Ausführungsbeispiels erläutert, ist es möglich, für asymmetrisch aufgebaute Batterien, d.h. für Batterien mit im Bezug auf eine durch ihre Kontakte gehende Achse asymmetrischem Querschnitt die Innenkontur der Hülle derart eng an die Außenkontur der Batterie anzupassen, daß die Batterie nur in einer bestimmten Lage in die Hülle eingesteckt werden kann und damit verpolungssicher einsetzbar ist.

Weiterhin ist es besonders vorteilhaft, wenn zur Befestigung der Vorrichtung an einer Seitenfläche der Hülle ein selbstklebendes Klettband angeordnet ist.

Im folgenden wird anhand der beigefügten Zeichnungen ein Ausführungsbeispiel für eine Aufnahmevorrichtung nach der Erfindung näher erläutert.

In den Zeichnungen zeigen:
Fig. 1 eine Aufnahmevorrichtung zur Halterung und Kontaktierung von Batterien im Längsschnitt;
Fig. 2 einen vergrößerten Ausschnitt aus Fig. 1;
Fig. 3 eine Draufsicht auf das offene Ende der Aufnahmevorrichtung nach Fig. 1;
Fig. 4 in perspektivischer Darstellung die Aufnahmevorrichtung nach Fig. 1 bis 3 mit einer Batterie kurz vor dem Einstecken derselben.

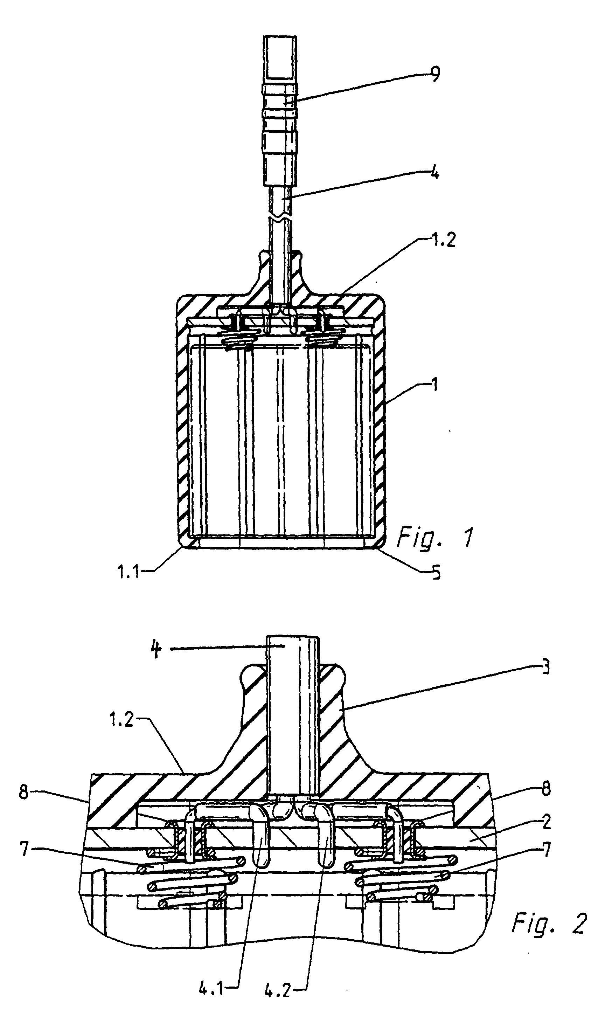

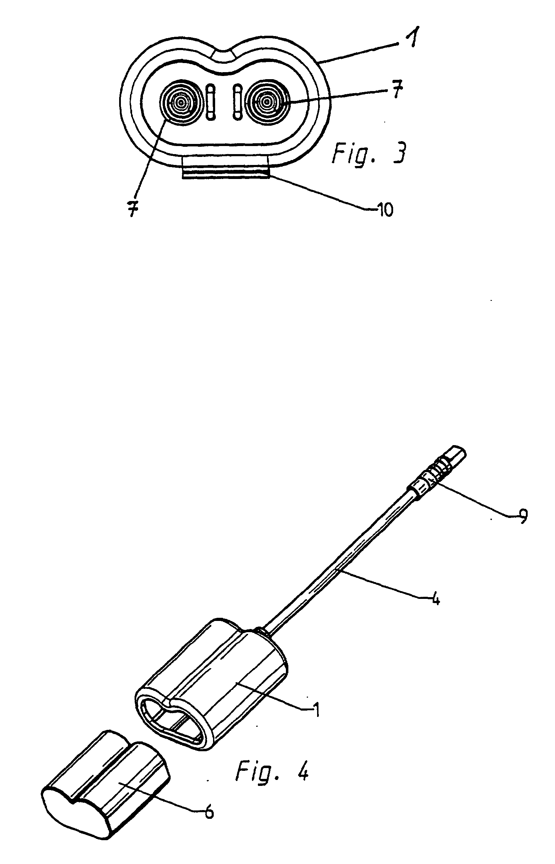

Die in den Fig. 1 bis 4 dargestellte Aufnahmevorrichtung zur Halterung und Kontaktierung von Batterien besitzt eine taschenartige Hülle 1 aus einem elastomeren Material, deren Innenkontur, wie insbesondere den Fig. 3 und 4 zu entnehmen, der Außenkontur der aufzunehmenden Batterie 6 entspricht. Im Querschnitt weist diese Kontur eine im wesentlichen ovale Form auf mit einer an einer Seitenfläche angeordneten muldenartigen Vertiefung. Die Hülle 1 besitzt an ihrem einen Ende eine Einstecköffnung 1.1 und an dem der Einstecköffnung 1.1 gegenüberliegenden geschlossenen Ende einen Boden 1.2. Im Innenraum der Hülle 1 ist vor dem Boden 1.2 eine Kontaktplatte 2 formschlüssig gefaßt, die auf der dem Innenraum der Hülle 1 zugewandten Seite mit Federkontakten 7 versehen ist, welche mittels Nieten 8 an der Kontaktplatte 2 befestigt sind. In die Hohlräume der Nieten 8 sind die Enden der Adern 4.1 und 4.2 eines Anschlußkabels 4 eingelötet. An der Einstecköffnung 1.1 besitzt die Hülle 1 einen umlaufenden, nach innen ragenden Kragen 5, der die in die Hülle 1 eingesteckte Batterie an ihrer Rückseite hintergreift und dadurch in ihrer Lage fixiert und sie mit ihren Batteriekontakten gegen die Federkontakte 7 drückt.

An den Boden 1.2 der Hülle 1 ist eine Tülle 3 angeformt, durch welche das Anschlußkabel 4 wasserdicht nach außen geführt ist. Das Anschlußkabel 4 besitzt an seinem Ende einen Anschlußstecker 9. An der Außenseite der Hülle 1 ist ein selbstklebendes Klettband 10 vorgesehen, das an der einen Breitseite in Längsrichtung der Hülle 1 verlaufend aufgebracht ist und zur Befestigung der Hülle an oder in einer Armatur dient.

Da, wie aus Fig. 4 ersichtlich, die einzusetzende Batterie 6 einen in bezug auf eine durch ihre Batteriekontakte gehende Achse asymmetrischen Querschnitt mit einer an einer Seitenwand in Längsrichtung verlaufenden muldenartigen Vertiefung aufweist, während die gegenüberliegende Seite eben ausgebildet ist und wie aus Fig. 3 und 4 zu entnehmen, der Querschnitt der Hülle 1 eine an diese Batteriekontur eng angepaßte Form besitzt, kann die Batterie 6 nur in einer bestimmten Lage in die Hülle 1 eingeschoben werden, während dies in einer um die Batterieachse um 180° verdrehten Lage nicht möglich ist. Man erkennt, daß die Batterie 6 in die Hülle 1 verpolungssicher einsetzbar ist.

## Patentansprüche

1. Aufnahmevorrichtung zur Halterung und Kontaktierung von Batterien, insbesondere Lithium-Fotobatterien, zur Anwendung in feuchtigkeitsgefährdeter Umgebung, insbesondere in elektronisch gesteuerten Sanitärarmaturen, **dadurch gekennzeichnet, daß** sie eine taschenartige Hülle (1) aus einem elastomeren Material aufweist, deren Innenkontur der Außenkontur der aufzunehmenden Batterie (6) entspricht und die an einem Ende eine Einstecköffnung (1.1) für die Batterie besitzt, während an dem der Einstecköffnung gegenüberliegenden geschlossenen Ende (1.2) im Innenraum der Hülle (1) eine Platte (2) angeordnet ist, die auf der dem Innenraum zugewandten Seite mit Federkontakten (7) versehen ist, und an der Hülle (1) im Bereich der Einstecköffnung (1.1) ein umlaufender, nach innen ragender Kragen (5) derart angeordnet ist, daß die Batterie (6) im eingesteckten Zustand von ihm hintergriffen und dadurch in ihrer Lage fixiert und gegen die Federkontakte (7) gedrückt wird und daß am geschlossenen Ende (1.2) der Hülle (1) ein Anschlußkabel (4) feuchtigkeitsdicht herausgeführt ist.

2. Aufnahmevorrichtung nach Anspruch 1, **dadurch gekennzeichnet, daß** für Batterien (6) mit in bezug auf eine durch ihre Kontakte gehende Achse asymmetrischem Querschnitt die Anpassung der Innenkontur der Hülle (1) an die Außenkontur der Batterie (6) derart genau ist, daß ein Einstecken der Batterie in einer um die Längsachse um 180° verdrehten Lage unmöglich gemacht wird.

3. Aufnahmevorrichtung nach Anspruch 1 oder 2, **dadurch gekennzeichnet, daß** an die Hülle (1) an ihrem geschlossenen Ende (1.2) eine Tülle (3) angeformt ist, durch die das an seinem äußeren Ende mit einem Stecker (9) versehene Anschlußkabel (4) wasserdicht hindurchgeführt ist.

4. Aufnahmevorrichtung nach einem der Ansprüche 1 bis 3, **dadurch gekennzeichnet, daß** zu ihrer Befestigung an einer der Seitenflächen der Hülle (1) ein selbstklebendes Klettband vorgesehen ist.

## Claims

1. Containing device for holding and making contact with batteries, particularly lithium photographic batteries, for use in an environment where there is a risk of moisture, particularly in electronically controlled sanitary appliances, **characterised in that** it has a pocket-like sheath (1) which is made of an elastomeric material and whose internal contour corresponds to the external contour of the battery (6) to be contained and which possesses, at one end, an insertion aperture (1.1) for the battery, while at the closed, opposite end (1.2) from the said insertion aperture there is disposed in the interior space of the said sheath (1) a plate (2) which is provided with spring contacts (7) on that side which faces towards the said interior space, and a circumferential, inwardly projecting collar (5) is disposed on the sheath (1), in the region of the insertion aperture (1.1), in such a way that, in the inserted condition, the battery (6) has the said collar engaging behind it and is thereby fixed in its position and pressed against the spring contacts (7), and that a connecting cable (4) is fed out in a watertight manner at the closed end (1.2) of the sheath (1).

2. Containing device according to claim 1, **characterised in that**, in the case of batteries (6) with a cross-section which is asymmetrical with respect to an axis passing through their contacts, the adaptation of the internal contour of the sheath (1) to the external contour of the battery (6) is so precise that insertion of the battery in a position which is rotated by 180° about the longitudinal axis is rendered impossible.

3. Containing device according to claim 1 or 2, **characterised in that** a bush (3), through which the connecting cable (4), which is provided with a plug (9) at its outer end, is fed in a watertight manner, is moulded onto the sheath (1) at its closed end (1.2).

4. Containing device according to one of claims 1 to 3, **characterised in that** a self-adhesive, burr-type strip is provided on one of the lateral faces of the sheath (1) for fastening the said device.

## Revendications

1. Dispositif de réception pour la fixation et l'établissement du contact des piles, notamment des piles au lithium pour appareils photographiques, destinées à être utilisées dans un environnement exposé à l'humidité, en particulier sur la robinetterie de sanitaires à commande électronique, **caractérisé en ce qu'**il possède une enveloppe (1) en forme de poche réalisée dans un matériau élastomère, dont le contour intérieur correspond au contour extérieur de la pile (6) venant s'y loger et qui possède à une extrémité un orifice d'introduction (1.1) de la pile, tandis qu'à l'extrémité fermée faisant face à l'ouverture d'introduction, une plaque (2) est disposée (1.2) dans l'espace intérieur de l'enveloppe (1), ladite plaque étant munie de contacts à ressort (7) sur la face tournée vers l'espace intérieur, et un col (5) circulaire, dépassant vers l'intérieur, est situé sur l'enveloppe (1), dans la région de l'ouverture d'introduction (1.1), de manière à saisir la pile (6) par l'arrière lorsqu'elle est enfoncée et, par là-même, à la fixer dans sa position et à la comprimer contre les contacts à ressort (7) et **en ce qu'**un câble de raccordement (4) sort à l'extrémité fermée (1.2) de l'enveloppe (1) de manière étanche à l'humidité.

2. Dispositif de réception suivant la revendication 1, **caractérisé en ce que**, pour des piles (6) ayant une section asymétrique par rapport à un axe passant par leurs contacts, l'ajustage du contour intérieur de l'enveloppe (1) au contour extérieur de la pile (6) est tellement précis qu'il est impossible d'introduire la pile dans une position tournée de 180° autour de l'axe longitudinal.

3. Dispositif de réception suivant la revendication 1 ou 2, **caractérisé en ce qu'**un passe-câble (3) est formé sur l'enveloppe (1), à son extrémité fermée (1.2), par lequel le câble de raccordement (4), muni d'une fiche (9) à son extrémité extérieure, passe de manière étanche à l'eau.

4. Dispositif de réception suivant l'une des revendications 1 à 3, **caractérisé en ce qu'**une bande agrippante auto-adhésive est prévue sur l'une des faces latérales de l'enveloppe (1) pour le fixer.
